# EUROPEAN PATENT SPECIFICATION

(11) **EP 2 689 994 B1**
(45) Date of publication and mention of the grant of the patent: **07.09.2016**
(21) Application number: 13177615.5
(22) Date of filing: 23.07.2013
(51) Int. Cl.: B62J 99/00, B62K 21/26, B62K 23/04

(54) **Straddle type vehicle with multifunctional display**
Grätschsitz-Fahrzeug mit mehrfunktionalem display
Véhicule de type à selle avec écran de visualisation multifonctionnelle

(30) Priority: 27.07.2012 JP 2012167327
(43) Date of publication of application: 29.01.2014
(73) Proprietor: Yamaha Hatsudoki Kabushiki Kaisha, Iwata-shi, Shizuoka-ken 438-8501 (JP)
(72) Inventor: Taniguchi, Masatoshi, Shizuoka-ken, 438-8501 (JP); Yoshida, Takayuki, Shizuoka-ken, 438-8501 (JP); Kamo, Atsushi, Shizuoka-ken, 438-8501 (JP)
(74) Representative: Zimmermann, Tankred Klaus

(56) References cited:
- EP-A2- 1 129 931
- WO-A1-2009/145786
- DE-A1-102007 040 738
- US-A1- 2013 030 604
- US-B1- 6 225 584

## Description

### BACKGROUND

### Technical Field

The present invention relates to straddle type vehicles and, more particularly, to straddle type vehicles that allow the settings of functions to be changed.

### Description of the Background Art

Straddle type vehicles include motorcycles, for example. A motorcycle includes a switch that can be operated by the rider.

JP Sho58(1983)-76379 A discloses a switching mechanism for a display device in a vehicle with handlebars. The display device includes a display unit. The display unit displays a parameter for one function selected from a plurality of functions. The display device includes a plurality of function indicator marks. A function indicator mark indicates a function being selected. The handlebars include grips. A selector switch is located near one of the grips. The selector switch is used to select one of the functions.

EP 1 129 931 A2 describes a switch panel device in a saddle type vehicle. Plural switches are arranged on columns or on stages and an indicating and warning switch group having high urgency and frequency of use is allocated to the column which is located near a handle grip and is also allocated to a first stage which is set on a horizontal line including a handle pipe and to stages which are adjacent above and below the first stage. An audio switch group and a switch group for CB radio communication are allocated to positions remote from the handle grip.

US 6,225,584 B1 describes an audio operating device provided on a handlebar of a motorcycle. The device includes a first operating plane which is tilted outwardly from the longitudinal axis of the vehicle, which contains audio switches which are generally operated most frequently. The switches on the first operating plane are accessible by a rider's left hand while holding the left handle grip. The left side of the device includes a talk knob and a power switch. The second operating plane and a right side of the device include switches which are less frequently used, and are accessible by the rider's right hand.

WO 2009/145786 A1, according to the preamble of claim 1, describes a vehicle having at least one sound output device to receive an output of at least one audio signal transmitting device. A display device has a plurality of display modes. A first plurality of buttons includes four first buttons arranged in a generally circular pattern. At least one second button is arranged in proximity to the generally circular pattern. One of the second buttons selects a display mode of the display device. The first plurality of buttons controls the output of an audio signal transmitting device associated with the selected display mode. An output of the audio signal transmitting device associated with the selected mode is transmitted to the rider via the at least one sound output device. One of the second buttons changes a function of at least one of the first plurality of buttons.

### SUMMARY

An object of the present invention is to provide a straddle type vehicle that allows the setting of a function selected from a plurality of functions to be changed.

This object is achieved by a straddle type vehicle according to claim 1.

A straddle type vehicle according to a first aspect of the present invention includes an operation unit, a display unit and a control unit. The display unit displays information associated with at least one of a plurality of functions each having a changeable setting. The control unit changes the setting of the function indicated by the information displayed on the display unit. The operation unit allows for a select operation and a change operation. The select operation selects at least one of the plurality of functions. The change operation changes the setting of the function indicated by the information displayed on the display unit. The display unit displays information associated with the function selected by the select operation. The control unit changes, in accordance with the change operation, the setting of the function indicated by the information displayed on the display unit.

In the first aspect, the select operation on the operation unit selects at least one of a plurality of functions. The change operation on the operation unit changes the setting of the selected function. That is, the setting of the function selected from a plurality of functions may be changed.

In connection with the first aspect, a second aspect further includes a handlebar and a grip located on the handlebar. The operation unit is located near the grip.

This will allow the rider of the straddle type vehicle to operate the operation unit while holding the grip. This will make it easier to operate the operation unit.

In connection with the second aspect, a third aspect further includes a switch box located near the grip. The operation unit is located on the switch box.

This will allow the rider of the straddle type vehicle to operate the operation unit while holding the grip. This will make it easier to operate the operation unit.

In connection with the second aspect, a fourth aspect provides that the grip is a non-rotatable grip. Thus, the rider of the straddle type vehicle need not rotate the grip. This will make it easier to operate the operation unit.

In connection with the second aspect, a fifth aspect provides that the grip includes a throttle operating member and a grip member. The throttle operating member is used to adjust the throttle opening. The grip member is located opposite the throttle operating member such that both members are arranged in a vehicle width direction. The operation unit is located near the grip member.

Typically, the grip member need not be rotated. Thus, the rider of the straddle type vehicle need not rotate the grip member. As a result, the operation unit is easier to operate.

In connection with the second aspect, a sixth aspect provides that the grip includes a right grip member located on the right end as measured in a vehicle width direction and a left grip member located on the left end as measured in a vehicle width direction. The operation unit is located near the left grip member.

Typically, the left grip member need not be rotated. Thus, the rider of the straddle type vehicle need not rotate the left grip member. As a result, the operation unit is easier to operate.

In connection with any one of the first to sixth aspects, a seventh aspect provides that the operation unit includes a select operation unit that can be used for the select operation and a change operation unit that can be used for the change operation. Thus, the select and change operations are performed on separate operation subunits. This will make it easier to distinguish between the select and change operations.

In connection with the seventh aspect, an eighth aspect provides that an operation on the select operation unit and an operation on the change operation unit are established by movements in different directions. This will make it easier to distinguish between the select operation and the change operation.

In connection with the seventh or eighth aspect, a ninth aspect provides that the change operation unit allows for an operation for a first direction and an operation for a second direction that is opposite the first direction. This will make it easier to instinctively recognize the change operation.

In connection with any one of the first to ninth aspects, a tenth aspect provides that the display unit includes a first region and a second region. The first region displays information associated with the function selected by the select operation. The second region displays information associated with the setting of the function indicated by the information displayed in the first region.

Thus, the selected function and its setting are displayed in different regions. This will make the selected function and its setting easier to understand. Also, the setting of the currently selected function can be recognized. This will make it easier to perform an operation to change the setting.

In connection with the first aspect, an eleventh aspect provides that the select operation is performed by operating a single operation switch. This will make it easier to perform the select operation.

In connection with the eleventh aspect, a twelfth aspect provides that the select operation is performed by operating the operation switch in a movement in a single direction. This will make it easier to perform the select operation.

In connection with the eleventh or twelfth aspect, a thirteenth aspect provides that the currently selected function switches each time the operation switch is operated. This will make it easier to switch among functions, and make it easier to recognize that switching occurs among functions is occurring than in implementations where the currently selected function also switches when the operation switch is continuously operated.

### BRIEF DESCRIPTION OF THE DRAWINGS

[FIG. 1] FIG. 1 is a left side view of an entire motorcycle according to an embodiment of the present invention.
[FIG. 2] FIG. 2 is a plan view of the handlebars of the motorcycle shown in FIG. 1.
[FIG. 3] FIG. 3 is a plan view of one of the switch boxes of the motorcycle shown in FIG. 1.
[FIG. 4] FIG. 4 is a rear view of the same one of the switch boxes of the motorcycle shown in FIG. 1.
[FIG. 5] FIG. 5 is a front view of the same one of the switch boxes of the motorcycle shown in FIG. 1.
[FIG. 6] FIG. 6 is a left side view of the same one of the switch boxes of the motorcycle shown in FIG. 1.
[FIG. 7] FIG. 7 is a left side view of the same switch box, illustrating the relationship between the first and second operation surfaces of the change switch of the motorcycle shown in FIG. 1.
[FIG. 8] FIG. 8 is a front view of the instrument panel of the motorcycle shown in FIG. 1.
[FIG. 9] FIG. 9 illustrates the setting display screen of the instrument panel shown in FIG. 8.
[FIG. 10] FIG. 10 illustrates icons to be displayed in the first display region of the setting display screen.
[FIG. 11] FIG. 11 is a functional block diagram illustrating an implementation that allows a function to be selected and settings to be changed.
[FIG. 12] FIG. 12 illustrates the setting display screen as appears when the icon indicative of the function of setting the temperature of the grips is displayed in the first display region.
[FIG. 13] FIG. 13 illustrates the setting display screen as appears when the icon indicative of the function of switching among different categories of measurement data to be displayed in the second display region is displayed in the first display region.
[FIG. 14] FIG. 14 illustrates the setting display screen as appears when the icon indicative of the function of raising and lowering the windshield is displayed in the first display region.
[FIG. 15] FIG. 15 illustrates the setting display screen as appears when the icon indicative of the function of adjusting the damping force is displayed in the first display region.
[FIG. 16] FIG. 16 illustrates the setting display screen as appears when the icon indicative of the function of adjusting the pre-load is displayed in the first display region.
[FIG. 17] FIG. 17 illustrates icons to be displayed in the first display region of the setting display screen while the motorcycle is running.

### DESCRIPTION OF THE EMBODIMENTS

### [Embodiments]

Now, a straddle type vehicle according to an embodiment of the present invention will be described with reference to the drawings. The present embodiment illustrates a touring motorcycle to describe the straddle type vehicle. The same or corresponding parts throughout the drawings are labeled with the same characters, and their description will not be repeated.

### [Overall Configuration]

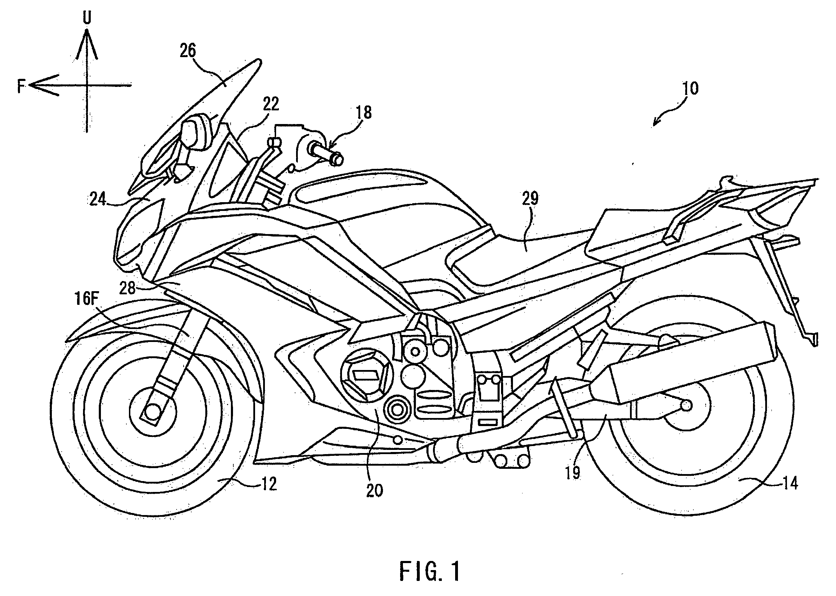

FIG. 1 is a left side view of a motorcycle 10 according to an embodiment of the present invention. In the description below, "front/forward", "rear(ward)", "left" and "right" mean directions as perceived by a rider sitting on the seat 29 of the motorcycle 10. In FIG. 1, arrow "F" indicates the forward direction with respect to the motorcycle 10, and arrow "U" the upward direction with respect to the motorcycle 10.

The motorcycle 10 includes a front wheel 12 and rear wheel 14.

The front wheel 12 is rotatably supported by a front suspension 16F. The front wheel 12 swings as the handlebars 18 are turned.

The rear wheel 14 is rotatably supported by the rear arm 19 attached to the body frame. The rear wheel 14 is located rearward of the power unit 20. The rear wheel 14 rotates as power from the power unit 20 is transmitted thereto.

An instrument panel 22 is located forward of the handlebars 18. A front cowl 24 is located forward of the instrument panel 22.

A windshield 26 is provided on the front cowl 24. A pair of side cowls 28, to the left and right, are located lower than and rearward of the front cowl 24.

A seat 29 is located rearward of the side cowl 28 as viewed from the side of the vehicle. The seat 29 is located above the power unit 20. The rear end of the seat 29 is located above the rear wheel 14.

### [Handlebars]

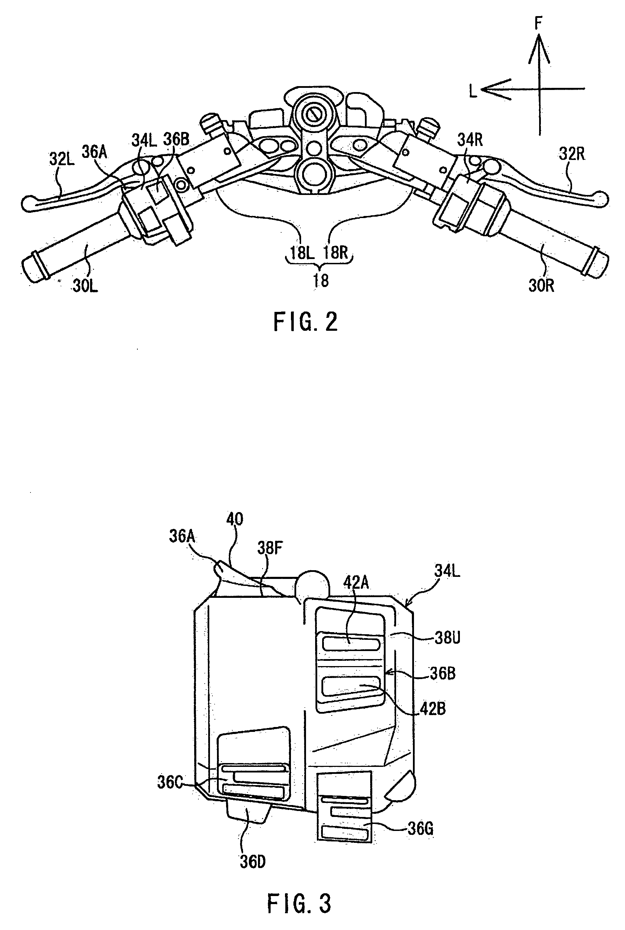

The handlebars 18 will be described with reference to FIG. 2. FIG. 2 is a plan view of the handlebars 18. In FIG. 2, arrow "F" indicates the forward direction with respect to the motorcycle, and arrow "L" the left direction with respect to the motorcycle 10.

The handlebars 18 are so-called "separate" handlebars and include a right handlebar 18R and left handlebar 18L. The handlebars are not limited to separate handlebars. In a non-separate handlebar (for example, a bar-type handlebar), the right half of the handlebar, as divided at the center of the handlebar as measured in a vehicle width direction, is considered to be the right handlebar and the left half of the handlebar the left handlebar.

### [Right Handlebar]

A grip 30R is located at the right end of the right handlebar 18R. The grip 30R can be rotated when being operated. As the rider operates the grip 30R, the degree of opening of the throttles is changed. In other words, the grip 30R is a throttle operating member and a right grip member.

A brake bar 32R is located forward of the right handlebar 18R. As the rider operates the brake lever 32R, the brake for the front wheel 12 is activated.

A switch box 34R is located on the right handlebar 18R near the grip 30R. On the switch box 34R is disposed, for example, a start switch for driving the starter.

### [Left Handlebar]

A grip 30L is located at the left end of the left handlebar 18L. The grip 30L cannot be rotated. In other words, the grip 30L is a grip member and a left grip member.

A clutch lever 32L is located forward of the left handlebar 18L. As the rider operates the clutch lever 32L, the clutch is engaged or disengaged.

A switch box 34L is located on the left handlebar 18L near the grip 30L.

### [Switch Box]

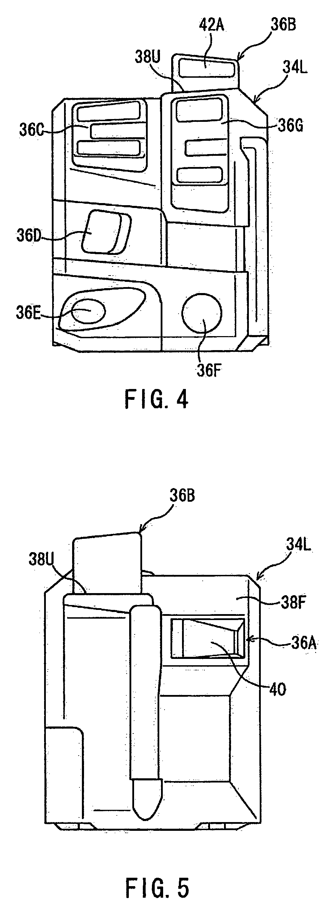

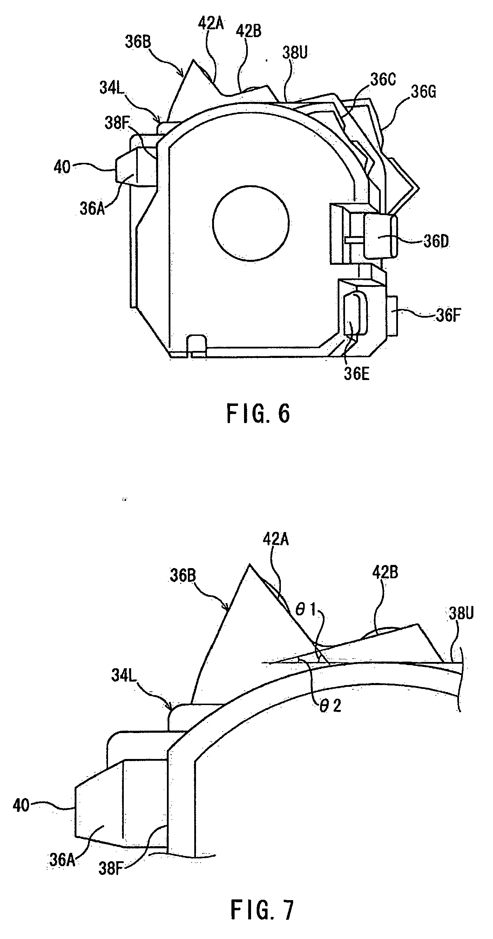

The switch box 34L will be described with reference to FIGS. 3 to 7. FIG. 3 is a plan view of the switch box 34L. FIG. 4 is a rear view of the switch box 34L. FIG. 5 is a front view of the switch box 34L. FIG. 6 is a left side view of the switch box 34L. FIG. 7 is a left side view of the switch box 34L, illustrating the relationship between the first operation surface 42A and second operation surface 42B.

The switch box 34L includes a select switch 36A that serves as the select operation unit and a change switch 36B that serves as the change operation unit. The switch box 34L includes switches other than the select switch 36A and change switch 36B. In the present embodiment, such switches include a dimmer switch 36C, flasher switch 36D, horn switch 36E, cruise control switch 36F and cruise control function switch 36G, a detailed description of which will not be given.

### [Select switch]

The select switch 36A projects from the switch box 34L. The select switch 36A is located on an upper portion of the front surface 38F of the switch box 34L. The select switch 36A includes an operation surface 40. The operation surface 40 slopes toward the front surface 38F. Portions of the operation surface 40 that are located outward in a vehicle width direction have a greater projection from the front surface 38F than portions thereof that are located inward. The operation surface 40 is located forward of the front surface 38F. In the present embodiment, the foremost point of the operation surface 40 is located forward of the foremost point of the front surface 38F, i.e. the foremost point of the switch box 34L (see FIGS. 3 and 6).

The select switch 36A is swingable in a front-to-rear direction. The swing axis of the select switch 36A is located to the right portion of the select switch 36A and extends in a top-to-bottom direction.

The select switch 36A is constantly biased by a spring located inside the switch box 34L. This keeps the select switch 36A in the position shown in FIG. 3 (hereinafter referred to as "default position").

The select switch 36A is operated as the operation surface 40 is pressed against the biasing force of the spring. At this moment, the operation surface 40 moves closer to the front surface 38F. When the pressing force ceases to act on the operation surface 40, the biasing force of the spring forces the select switch 36A back to the default position. In other words, the select switch 36A can be moved in a single direction while being operated.

### [Change Switch]

The change switch 36B projects upward from the upper surface 38U of the switch box 34L, i.e. projects upward from the uppermost point of the switch box 34L. The change switch 36B is located on a right portion of the upper surface 38U of the switch box 34L. The change switch 36B includes a first operation surface 42A and a second operation surface 42B. The first operation surface 42A is located forward of the second operation surface 42B. The first and second operation surfaces 42A and 42B are located higher than the upper surface 38U. Each of the first and second operation surfaces 42A and 42B is a flat surface with a bump in its middle. This makes it easier to operate the switch.

As shown in FIG. 7, the angle of slope of the first operation surface 42A relative to the upper surface 38U, θ1, is larger than the angle of slope of the second operation surface 42B relative to the upper surface 38U, θ2. This makes it easier to distinguish between the first and second operation surfaces 42A and 42B, and also makes the first operation surface 42A easier to operate. In implementations where the switch box 34L has a curved upper surface, the angles of slope θ1 and θ2 are measured relative to the horizontal plane that is in contact with the uppermost point of the upper surface of the switch box 34L.

The change switch 36B is swingable around a swing axis. The swing axis of the change switch 36B extends along the length (axial direction) of the grip 30L. The swing axis of the change switch 36B may extend along the boundary between the first and second operation surfaces 42A and 42B as viewed in a plan view of the change switch 36B, for example.

The change switch 36B is constantly biased by springs located in the switch box 34L. This keeps the change switch 36B in the position shown in FIG. 6 (hereinafter referred to as "default position").

The change switch 36B may be operated as the first operation surface 42A is pressed against the biasing force of the associated spring. At this moment, the first operation surface 42A falls forward. When the pressing force ceases to act on the first operation surface 42A, the biasing force of the associated spring forces the change switch 36B back to the default position.

The change switch 36B may be operated as the second operation surface 42B is pressed against the biasing force of the associated spring. At this moment, the second operation surface 42B falls rearward. When the pressing force ceases to act on the second operation surface 42B, the biasing force of the associated spring forces the change switch 36B back to the default position.

In short, the change switch 36B may be moved in a plurality of directions while being operated.

### [Selection of Function and Changing of Settings]

Operating the select switch 36A and change switch 36B will change the setting of a function selected from a plurality of functions featured in the motorcycle 10. Details thereof will be described below.

The setting of a function is displayed on the setting display screen. The rider can change the setting of the function while looking at the setting display screen. The setting display screen may be disposed on the instrument panel 22, for example.

### [Setting Display Screen]

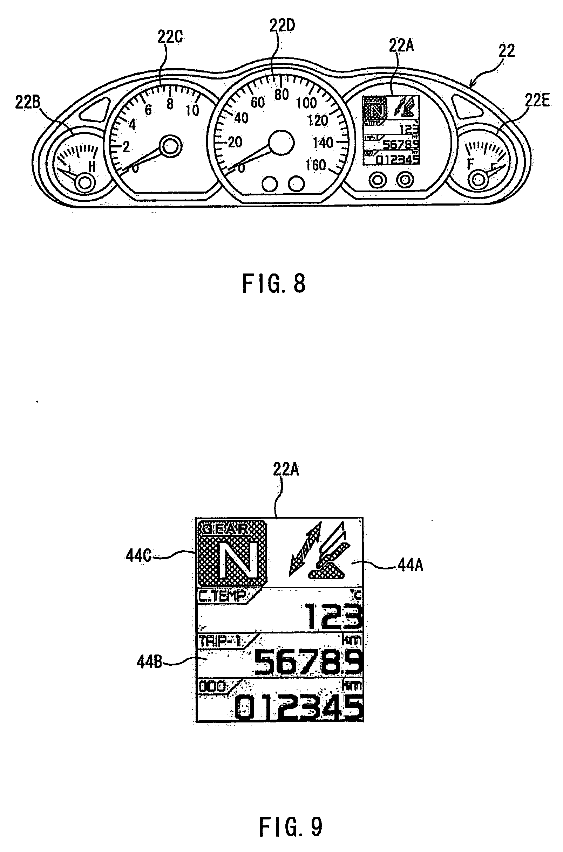

The setting display screen will be described with reference to FIGS. 8 and 9. FIG. 8 is a front view of the instrument panel 22. FIG. 9 illustrates the setting display screen.

The instrument panel 22 includes a setting display screen 22A. In addition to the setting display screen 22A, the instrument panel 22 includes a water temperature meter display screen 22B, tachometer display screen 22C, speedometer display screen 22D and fuel indicator display screen 22E, a detailed description of which will not be given.

As shown in FIG. 9, the setting display screen 22A includes a first display region 44A and a second display region 44B. In addition to the first and second display regions 44A and 44B, the setting display screen 22A in the implementation shown in FIG. 9 includes a third display region 44C for indicating shift positions; however, the third display region 44C is not necessary in the setting display screen 22A.

### [First Display Region]

The first display region 44A indicates the currently selected one of the functions of the motorcycle 10. The currently selected function may be represented by a character, for example, or an image. The image may be an icon, for example. In the present implementation, the icon indicative of the currently selected function is displayed in the first display region 44A.

The currently selected function may be indicated by a blinking or shining lamp, for example. In such implementations, different colors or blinking frequencies of the lamp may be used for each function, for example.

Alternatively, all the functions whose settings may be changed may be displayed in the form of icons or characters, for example, where the currently selected function is highlighted relative to the functions that are not currently selected. Highlighting may be achieved by blinking or reverse display, for example.

The functions featured in the motorcycle 10 may include, for example, regulating the temperature of the grips 30R and 30L, switching among items of measurement data to be displayed in the second display region 44B, raising and lowering the windshield 26, regulating the damping force of the suspension, regulating the pre-load on the suspension, regulating the temperature of the seat 29, regulating the operational level of traction control, regulating the operational level of the anti-lock brake system (ABS), setting the speed for cruise control, changing the travel mode, and the like. The measurement data may be referred to by the rider when driving the motorcycle 10, and may include, for example, total distance traveled, distance traveled in a given period of time, fuel efficiency, ambient temperature, temperature of the coolant in the engine, speed, maximum speed in a given period of time, shift position, number of engine revolutions and the like.

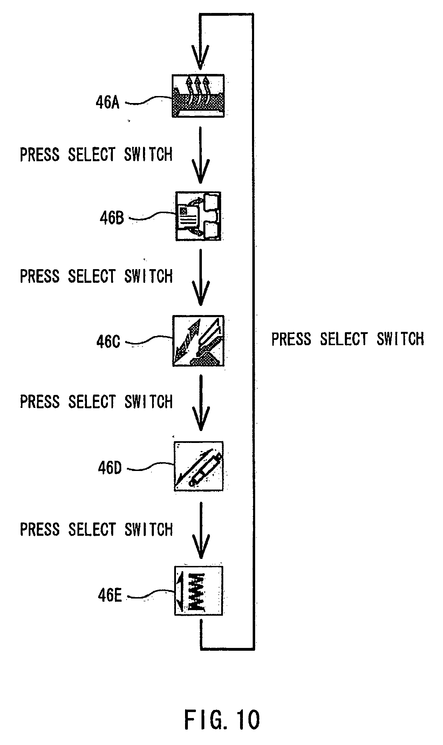

Operating the select switch 36A will cause switching among icons to be displayed in the first display region 44A. FIG. 10 illustrates icons that can be displayed in the first display region 44A. Icons that can be displayed in the first display region 44A will be described with reference to FIG. 10.

In the present implementation, the icons that can be displayed in the first display region 44A are: an icon 46A for regulating the temperature of the grips 30R and 30L; an icon 46B for changing the item of measurement data to be displayed in the second display region 44B; an icon 46C for raising and lowering the windshield 26; an icon 46D for regulating the damping force of the suspension 16F and 16R; and an icon 46E for regulating the pre-load on the suspension 16R.

In the present embodiment, each time the select switch 36A is pressed, switching occurs among the icons to be displayed in the first display region 44A. Switching occurs among the icons to be displayed in the first display region 44A in a predetermined order. Alternatively or additionally, the select switch 36A may be pressed continuously to cause successive switching among the icons to be displayed in the first display region 44A.

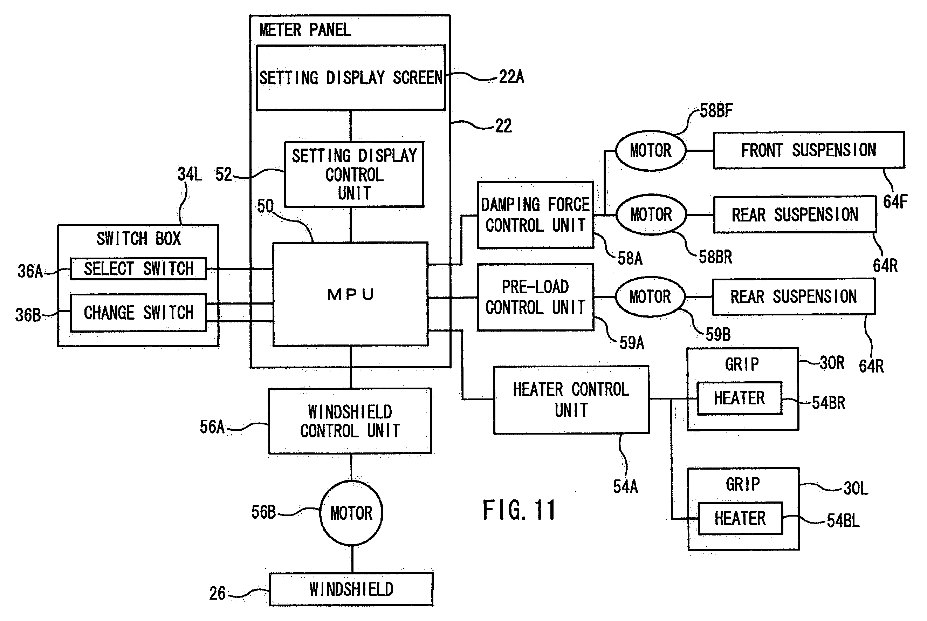

Switching among the icons to be displayed in the first display region 44A may be performed by a microprocessing unit (MPU), for example. FIG. 11 is a functional block diagram in which selection of a function and changing of settings may be implemented. Switching among the icons to be displayed will be described with reference to FIG. 11.

When the select switch 36A is operated, an operation signal is transmitted from the select switch 36A to the MPU 50. The MPU 50 may be located in the instrument panel 22, for example. Upon receiving the operation signal, the MPU 50 sends a switch signal to the setting display control unit 52. The setting display control unit 52 may be located in the instrument panel 22, for example. The setting display control unit 52 includes a driver for displaying information in the first and second display regions 44A and 44B. Upon receiving the switch signal, the setting display control unit 52 switches among the icons to be displayed in the first display region 44A in a predetermined order.

### [Second Display Region]

The second display region 44B (see FIG. 9) may display, for example, measurement data, the setting of the function represented by the icon displayed in the first display region 44A, the method for changing the setting of a function, and the like. Different kinds of information are displayed in the second display region 44B depending on the function represented by the icon displayed in the first display region 44A.

### [Grip Temperature Regulation]

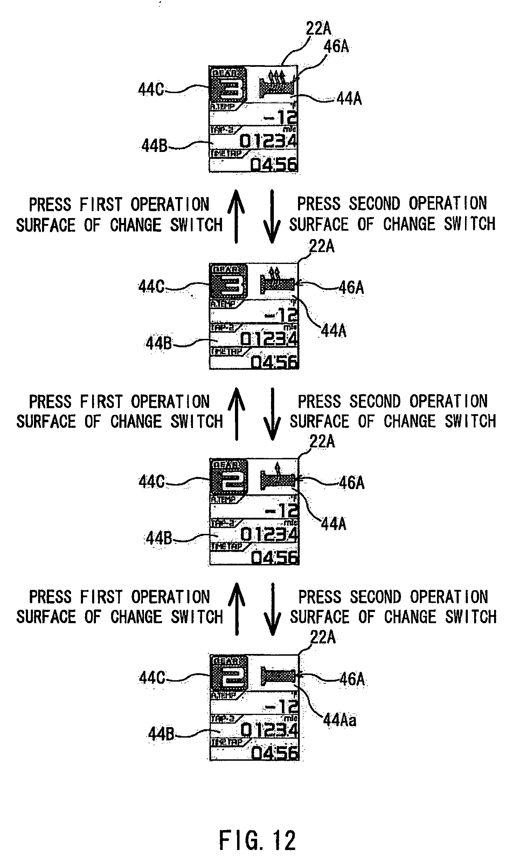

When the icon 46A (see FIG. 10) is displayed in the first display region 44A, measurement data is displayed in the second display region 44B, as shown in FIG. 12, for example. FIG. 12 illustrates the setting display screen 22A as appears when the icon 46A is displayed in the first display region 44A.

Pressing the first operation surface 42A of the change switch 36B causes the number of arrows in the icon 46A to increase, as shown in FIG. 12, indicating that the temperature of the grips 30R and 30L has increased. Pressing the second operation surface 42B of the change switch 36B causes the number of arrows in the icon 46A to decrease, as shown in FIG. 12, indicating that the temperature of the grips 30R and 30L has decreased.

Regulation of the temperature of the grips 30R and 30L may be performed by the MPU 50 (see FIG. 11), for example. Regulation of the temperature of the grips 30R and 30L will be described with reference to FIG. 11.

When the change switch 36B is operated, an operation signal is transmitted from the change switch 36B to the MPU 50. Upon receiving the operation signal, the MPU 50 sends a switch signal to the heater control unit 54A. The heater control unit 54A drives the heaters 54B in accordance with on the switch signal received. The heater control unit 54A includes a drive circuit for driving the heaters 54B.

More specifically, if the switch signal received is a first switch signal for temperature increase, the heater control unit 54A drives the heaters 54B in such a way that the temperature of the grips 30R and 30L increases. A first switch signal is generated when a first operation signal is provided to the MPU 50. A first operation signal is generated as the first operation surface 42A is pressed.

If the switch signal received is a second switch signal for temperature decrease, the heater control unit 54A drives the heaters 54B in such a way that the temperature of the grips 30R and 30L decreases. A second switch signal is generated when a second operation signal is provided to the MPU 50. A second operation signal is generated as the second operation surface 42B is pressed.

Upon receiving the operation signal, the MPU 50 sends a switch signal to the setting display control unit 52. Upon receiving the switch signal, the setting display control unit 52 switches among manners in which the icon 46A is displayed in the first display region 44A.

More specifically, if the switch signal received is a first switch signal for temperature increase, the setting display control unit 52 causes the number of arrows in the icon 46A to increase. If the switch signal received is a second switch signal for temperature decrease, the setting display control unit 52 causes the number of arrows in the icon 46A to decrease.

### [Switching of Measurement Data]

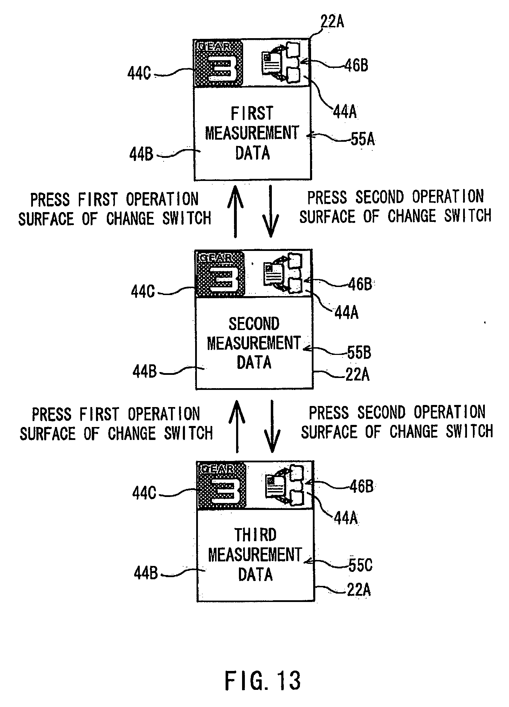

When the icon 46B (see FIG. 10) is displayed in the first display region 44A, measurement data is displayed in the second display region 44B, as shown in FIG. 13, for example. FIG. 13 illustrates the setting display screen 22A as appears when the icon 46B is displayed in the first display region 44A.

When the change switch 36B is operated, switching of measurement data to be displayed in the second display region 44B occurs, as shown in FIG. 13. In the present embodiment, the measurement data displayed in the second display region 44B includes first measurement data 55A, second measurement data 55B and third measurement data 55C. The measurement data displayed in the second display region 44B may be of one category or a plurality of categories. The measurement data to be displayed in the second display region 44B may be selected by the rider or may be predetermined data.

Switching of measurement data to be displayed in the second display region 44B may be performed by the MPU 50 (see FIG. 11), for example. Switch of measurement data to be displayed in the second display region 44B will be described with reference to FIG. 11.

When the change switch 36B is operated, an operation signal is transmitted from the change switch 36B to the MPU 50. Upon receiving the operation signal, the MPU 50 sends a switch signal to the setting display control unit 52. The setting display control unit 52 switches measurement data to be displayed in the second display region 44B in accordance with on the switch signal received.

More specifically, when the switch signal received is a first switch signal, the setting display control unit 52 switches measurement data to be displayed in the second display region 44B in a predetermined first order. A first switch signal is generated when a first operation signal is provided to the MPU 50. A first operation signal is generated as the first operation surface 42A is pressed.

When the switch signal received is a second switch signal, the setting display control unit 52 switches measurement data to be displayed in the second display region 44B in a predetermined second order. A second switch signal is generated when a second operation signal is provided to the MPU 50. A second operation signal is generated as the second operation surface 42B is pressed. The second order is the reverse of the first order.

### [Raising and Lowering of Windshield]

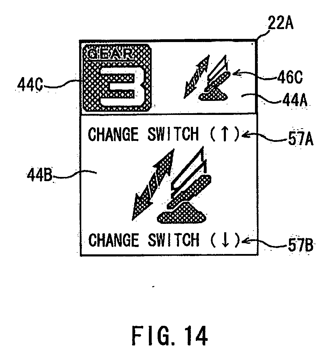

When the icon 46C (see FIG. 10) is displayed in the first display region 44A, the operation modes 57A and 57B for the change switch 36B as shown in FIG. 14, for example, is displayed in the second display region 44B. FIG. 14 illustrates the setting display screen 22A as appears when the icon 46C is displayed in the first display region 44A.

Pressing the first operation surface 42A of the change switch 36B causes the windshield 26 to be raised. Pressing the second operation surface 42B of the change switch 36B causes the windshield 26 to be lowered. In the present embodiment, the windshield 26 can be raised and lowered steplessly; alternatively, it may be raised and lowered in steps.

Raising and lowering of the windshield 26 may be performed by the MPU 50 (see FIG. 11), for example. Raising and lowering of the windshield 26 will be described with reference to FIG. 11.

When the change switch 36B is operated, an operation signal is transmitted from the change switch 36B to the MPU 50. Upon receiving the operation signal, the MPU 50 sends a drive signal to the windshield control unit 56A. The windshield control unit 56A drives the motor 56B in accordance with the drive signal received. As the motor 56B is driven, the windshield 26 is raised or lowered. The windshield control unit 56A includes a drive circuit for driving the motor 56B.

More specifically, if the drive signal received is a first drive signal for "raising", the windshield control unit 56A drives the motor 56B to raise the windshield 26. A first drive signal is generated when a first operation signal is provided to the MPU 50. A first operation signal is generated as the first operation surface 42A is pressed.

If the drive signal received is a second drive signal for "lowering", the windshield control unit 56A drives the motor 56B to lower the windshield 26. A second drive signal is generated when a second operation signal is provided to the MPU 50. A second operation signal is generated as the second operation surface 42B is pressed.

In the present embodiment, the information to be displayed in the second display region 44B remains unchanged as the windshield 26 is raised or lowered; however, the information to be displayed in the second display region 44B may be changed as the windshield 26 is raised or lowered. For example, the position of the windshield 26 as it is raised or lowered may be indicated by a parameter in the second display region 44 and the parameter to be displayed may be changed as the windshield 26 is raised or lowered.

### [Regulation of Damping Force of Suspension]

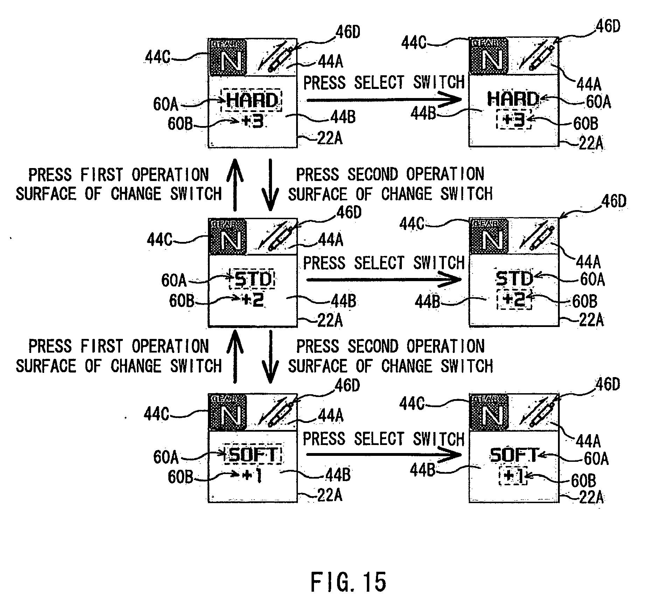

When the icon 46D (see FIG. 10) is displayed in the first display region 44A, the setting of the function represented by the icon 46D as shown in FIG. 15, for example, is displayed in the second display region 44B. FIG. 15 illustrates the setting display screen 22A as appears when the icon 46D is displayed in the first display region 44A. In FIG. 15, broken lines enclose changeable settings. A changeable setting may blink, for example.

In the second display region 44B, a basic setting 60A and a detailed setting 60B, vertically arranged, are displayed. When the icon 46D gets displayed in the first display region 44A, the basic setting 60A becomes changeable first. Operating the change switch 36B when the basic setting 60A is changeable causes switching among basic settings 60A, as shown in FIG. 15. In the implementation shown in FIG. 15, there are three basic settings 60A: HARD, STANDARD and SOFT; however, the present invention is not limited to these three basic settings 60A.

Pressing the select switch 36A to select a basic setting 60A makes the detailed setting 60B changeable. Operating the change switch 36B at this moment causes switching among detailed settings 60B, as shown in FIG. 15. In the implementation shown in FIG. 15, a detailed setting 60B is defined by a numerical value.

Pressing the select switch 36A to select a detailed setting 60B sets the damping force of the suspension.

Regulation of the damping force of the suspension may be performed by the MPU 50 (see FIG. 11), for example. Regulation of the damping force of the front suspension 16F and rear suspension 16R will be described with reference to FIG. 11.

When the change switch 36B is operated, an operation signal is transmitted from the change switch 36B to the MPU 50. Upon receiving the operation signal, the MPU 50 sends a switch signal to the setting display control unit 52. In accordance with the received switch signal, the setting display control unit 52 switches among basic settings 60A to be displayed in the second display region 44B.

More specifically, when the received switch signal is a first switch signal, the setting display control unit 52 switches among basic settings 60A to be displayed in the second display region 44B in a predetermined first order. A first switch signal is generated when a first operation signal is provided to the MPU 50. A first operation signal is generated as the first operation surface 42A is pressed.

If the received switch signal is a second switch signal, the setting display control unit 52 switches among basic settings 60A to be displayed in the second display region 44B in a predetermined second order. A second switch signal is generated when a second operation signal is provided to the MPU 50. A second operation signal is generated as the second operation surface 42B is pressed. The second order is the reverse of the first order.

When the select switch 36A is operated, a selection signal is transmitted from the select switch 36A to the MPU 50. Upon receiving the selection signal, the MPU 50 stores the current basic setting 60A.

Subsequently, when the change switch 36B is operated, an operation signal is transmitted from the change switch 36B to the MPU 50. Upon receiving the operation signal, the MPU 50 sends a switch signal to the setting display control unit 52. In accordance with the received switch signal, the setting display control unit 52 switches among detailed settings 60B to be displayed in the second display region 44B.

More specifically, when the received switch signal is a first switch signal, the setting display control unit 52 switches among detailed settings 60B to be displayed in the second display region 44B in a predetermined first order. A first switch signal is generated when a first operation signal is provided to the MPU 50. A first operation signal is generated as the first operation surface 42A is pressed.

If the received switch signal is a second switch signal, the setting display control unit 52 switches among detailed settings 60B to be displayed in the second display region 44B in a predetermined second order. A second switch signal is generated when a second operation signal is provided to the MPU 50. A second operation signal is generated as the second operation surface 42B is pressed. The second order is the reverse of the first order.

When the select switch 36A is operated, a selection signal is transmitted from the select switch 36A to the MPU 50. Upon receiving the selection signal, the MPU 50 stores the current detailed setting 60B.

The MPU 50 sends to the damping force control unit 58A a control signal in accordance with the selected basic setting 60A and detailed setting 60B. The damping force control unit 58A drives the motors 58BF and 58BR in accordance with the received control signal. The damping force control unit 58A includes a drive circuit for driving the motors 58BF and 58BR. Separate drive circuits may be provided for the respective motors. As the motor 58BF is driven, the damping force of the front suspension 16F is adjusted. As the motor 58BR is driven, the damping force of the rear suspension 16R is adjusted.

### [Regulation of Pre-load on Suspension]

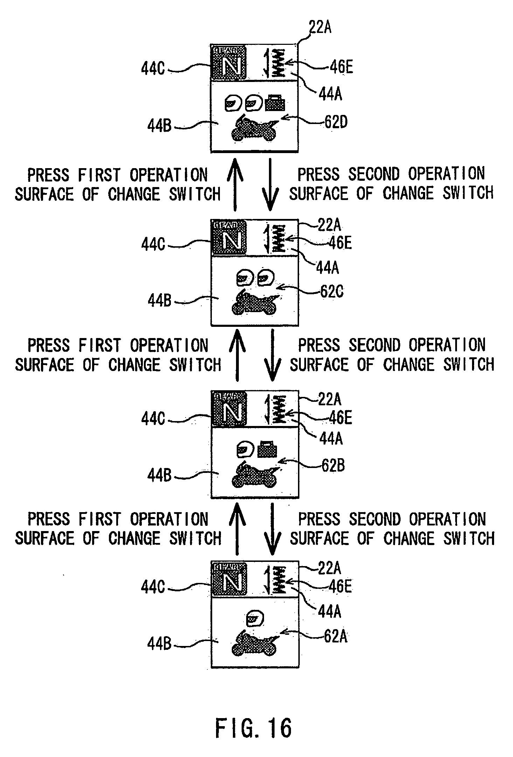

When the icon 46E (see FIG. 10) is displayed in the first display region 44A, the setting of the function represented by the icon 46E as shown in FIG. 16, for example, is displayed in the second display region 44B. FIG. 16 illustrates the setting display screen 22A as appears when the icon 46E is displayed in the first display region 44A.

When the change switch 36B is operated, switching of information associated with the setting of the pre-load on the suspension displayed in the second display region 44B occurs, as shown in FIG. 16. The information associated with the setting of the pre-load of the suspension may be represented by characters or by images. The images may be icons, for example. In the present embodiment, the information associated with the setting of the pre-load on the suspension is represented by icons. In the implementation shown in FIG. 16, the icons indicating the setting of the pre-load on the suspension are: an icon 62A indicative of one rider; an icon 62B indicative of one rider and a pannier being mounted; an icon 62C indicative of two riders; and an icon 62D indicative of two riders and a pannier being mounted.

Regulation of the pre-load on the suspension is performed by the MPU 50 (see FIG. 11), for example. Regulation of the pre-load on the rear suspension 16R will be described with reference to FIG. 11.

When the change switch 36B is operated, an operation signal is transmitted from the change switch 36B to the MPU 50. Upon receiving the operation signal, the MPU 50 sends a switch signal to the pre-load control unit 59A. In accordance with the received switch signal, the pre-load control unit 59A drives the motor 59B. The pre-load control unit 59A includes a drive circuit for driving the motor 59B. As the motor 59B is driven, the pre-load on the rear suspension 16R is adjusted.

More specifically, if the received switch signal is a first switch signal, the pre-load control unit 59A drives the motor 59B to increase the pre-load on the rear suspension 16R. A first switch signal is generated when a first operation signal is provided to the MPU 50. A first operation signal is generated as the first operation surface 42A is pressed.

If the received switch signal is a second switch signal, the pre-load control unit 59A drives the motor 59B to reduce the pre-load on the rear suspension 16R. A second switch signal is generated when a second operation signal is provided to the MPU 50. A second operation signal is generated as the second operation surface 42B is pressed.

In addition, upon receiving the operation signal, the MPU 50 sends a switch signal to the setting display control unit 52. Upon receiving the switch signal, the setting display control unit 52 switches among the icons to be displayed in the second display region 44B.

More specifically, if the received switch signal is a first switch signal, the setting display control unit 52 switches among the icons to be displayed in the second display region 44B in a predetermined first order. A first switch signal is generated when a first operation signal is provided to the MPU 50. A first operation signal is generated as the first operation surface 42A is pressed.

If the received switch signal is a second switch signal, the setting display control unit 52 switches among the icons to be displayed in the second display region 44B in a predetermined second order. A second switch signal is generated when a second operation signal is provided to the MPU 50. A second operation signal is generated as the second operation surface 42B is pressed. The second order is the reverse of the first order.

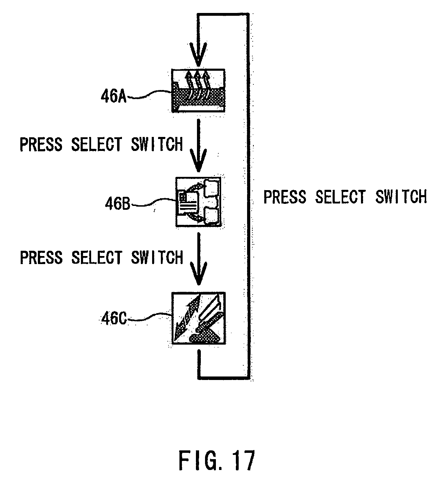

In the present embodiment, the damping force of and pre-load on the suspension can be regulated while the motorcycle 10 is at a halt. That is, the damping force of and pre-load on the suspension may not be regulated while the motorcycle 10 is running. In other words, the number of functions for which regulation is possible while the motorcycle 10 is running is smaller than the number of functions for which regulation is possible while the motorcycle 10 is at a halt. FIG. 17 illustrates icons to be displayed in the first display region 44A of the setting display screen 22A while the motorcycle 10 is running. In the present embodiment, the icons to be displayed in the first display region 44A while the motorcycle 10 is running are: the icon 46A for regulating the temperature of the grips 30R and 30L; the icon 46B for changing the item of measurement data to be displayed in the second display region 44B; and the icon 46C for raising and lowering the windshield 26. That is, in the present embodiment, there are only a limited number of functions for which regulation is possible while the motorcycle 10 is running. This will prevent the ride feel from changing significantly while the motorcycle 10 is running.

Alternatively, the damping force of or pre-load on the suspension can be fine-tuned while the motorcycle is running. In such implementations, the possible amount of change in the damping force of or pre-load on the suspension is smaller than the amount of change in these parameters that is possible while the motorcycle 10 is at a halt. That is, the functions for which regulation is possible while the motorcycle 10 is running are limited compared with the functions for which regulation is possible while the motorcycle 10 is at a halt.

A motorcycle 10 includes an operation unit, separately denoted as 36A and 36B, a display unit 22A and a control unit, separately denoted as 50, 52, 54A, 56A, 58A and 59A. The display unit 22A displays information associated with at least one of a plurality of functions each having a changeable setting. The control unit 50, 52, 54A, 56A, 58A and 59A changes the setting of the function indicated by the information displayed on the display unit 22A. The operation unit 36A and 36B allows for a select operation and a change operation. The select operation selects at least one of the plurality of functions. The change operation changes the setting of the function indicated by the information displayed on the display unit 22A. The display unit 22A displays information associated with the function selected by the select operation. The control unit 50, 52, 54A, 56A, 58A and 59A changes, in accordance with the change operation, the setting of the function indicated by the information displayed on the display unit 22A.

Thus, the select operation on the operation unit 36A selects at least one of a plurality of functions featured in the motorcycle 10. The change operation on the operation unit 36B changes the setting of the selected function. That is, the setting of the function selected from a plurality of functions featured in the motorcycle 10 may be changed.

Particularly, in the present embodiment, the display unit 22 displays information associated with one of the plurality of functions whose settings may be changed.

Thus, the display unit 22 displays information associated with the selected one of the functions. This will make the selected function easier to recognize.

The motorcycle 10 includes handlebars 18 and grips 30R and 30L. The grips 30R and 30L are located on the handlebars 18. The operation unit 36A and 36B is located near the grip 30L.

This will allow the rider to operate the operation unit 36A and 36B while holding the grip 30L. This will make it easier to operate the operation unit 36A and 36B.

The motorcycle 10 further includes a switch box 34L. The switch box 34L is located near the grip 30L. The operation unit 36A and 36B is located on the switch box 34L.

This will allow the rider to operate the operation unit 36A and 36B while holding the grip 30L. This will make it easier to operate the operation unit 36A and 36B.

In the motorcycle 10, the grip 30L is a non-rotatable grip. Thus, the rider need not rotate the grip 30L. This will make it easier to operate the operation unit 36A and 36B.

In the motorcycle 10, the grips 30R and 30L include a throttle operating member 30R and a grip member 30L. The throttle operating member 30R is used to adjust the throttle opening. The grip member 30L is located opposite the throttle operating member 30R such that both members are arranged in a vehicle width direction. The operation unit 36A and 36B is located near the grip member 30L.

Thus, the rider need not rotate the grip 30L. As a result, the operation unit 36A and 36B is easier to operate.

In the motorcycle 10, the grips 30R and 30L include a right grip member 30R located on the right end as measured in a vehicle width direction and a left grip member 30L located on the left end as measured in a vehicle width direction. The operation unit 36A and 36B is located near the left grip member 30L.

Thus, the rider need not rotate the grip 30L. As a result, the operation unit 36A and 36B is easier to operate.

In the motorcycle 10, the operation unit 36A and 36B includes a select operation unit 36A that can be used for the select operation and a change operation unit 36B that can be used for the change operation.

Thus, the select and change operations are performed on separate operation subunits. This will make it easier to distinguish between the select and change operations.

Particularly, in the present embodiment, the select operation unit 36A and change operation unit 36B are located on different faces of the switch box 34L. This will make it easier still to distinguish between the select and change operation units 36A and 36B.

In the motorcycle 10, an operation on the select operation unit 36A and an operation on the change operation unit 36B are established by movements in different directions. This will make it easier to distinguish between the select operation and the change operation.

In the motorcycle 10, the change operation unit 36B allows for an operation for a first direction and an operation for a second direction that is opposite the first direction. This will make it easier to instinctively recognize the change operation.

In the motorcycle 10, the display unit 22A includes a first region 44A and a second region 44B. The first region 44A displays information associated with the function selected by the select operation. The second region 44B displays information associated with the setting of the function indicated by the information displayed in the first region 44A.

Thus, the selected function and its setting are displayed in different regions. This will make the selected function and its setting easier to understand.

In the motorcycle 10, the select operation is performed by operating a single operation switch 36A. This will make it easier to perform the select operation.

In the motorcycle 10, the select operation is performed by operating the operation switch 36A in a movement in a single direction. This will make it easier to perform the select operation.

In the motorcycle 10, the currently selected function switches each time the operation switch 36A is operated. This will make it easier to switch among functions, and make it easier to recognize that switching among functions is occurring than in implementations where the currently selected function also switches when the operation switch is continuously operated.

The embodiment described above has illustrated a touring motorcycle; however, the present invention is not limited to such an arrangement. For example, the present invention may be employed in a motorcycle other than a touring motorcycle, or in a three- or four-wheeled leaning vehicle.

In the embodiment described above, the setting display screen 22A is located on the meter panel 22; however, the present invention need not be in such a configuration. For example, the setting display screen 22A may be located on the upper surface 38U of the switch box 34L.

In the embodiment described above, the select switch 36A and change switch 36B are located near the grip 30L; however, the present invention need not be in such a configuration. For example, the select switch 36A and change switch 36B may be provided on the meter panel 22 or near this panel, or on the surface of the vehicle body cover.

In the embodiment described above, the select switch 36A and change switch 36B are provided on the switch box 34L; however, the present invention need not be in such a configuration. For example, one of the select switch 36A and change switch 36B may be provided on the switch box 34L and the other may be provided on the switch box 34R. Alternatively, the select switch 36A and change switch 36B may be provided on the switch box 34R.

In the embodiment described above, the operation unit is implemented by two switches (select switch 36A and change switch 36B); alternatively, the operation unit may be implemented by one switch. In such implementations, the switch may be operated by pressing it as well as tilting it.

In the embodiment described above, the currently selected function and its setting are displayed in separate display regions (i.e. the first display region 44A and second display region 44B); alternatively, the currently selected function and its setting may be displayed in a single display region (for example, the first display region 44A).

## Claims

1. A straddle type vehicle comprising:
an operation unit (36A, 36B);
a display unit (22A) configured to display information associated with at least one of a plurality of functions each having a changeable setting; and
a control unit (50, 52, 54A, 56A, 58A) configured to change the setting of the function indicated by the information displayed on the display unit (22A),
wherein
the operation unit (36A, 36B) comprises a select switch (36A) configured to allow for a select operation for selecting at least one of the plurality of functions; and
the operation unit (36A, 36B) comprises a change switch (36B) configured to allow for a change operation for changing the settings of the plurality of functions,
the display unit (22A) is configured to display information associated with the function selected by the select operation,
the control unit (50, 52, 54A, 56A, 58A) is configured to change, in accordance with the change operation, the setting of the function indicated by the information displayed on the display unit (22A), **characterized in that**
all the functions whose settings can be changed are selected by the select switch (36A).

2. The straddle type vehicle according to claim 1, further comprising:
a handlebar (18, 18L, 18R); and
a grip (30L, 30R) located on the handlebar (18, 18L, 18R),
wherein the operation unit (36A, 36B) is located near the grip (30L, 30R).

3. The straddle type vehicle according to claim 2, further comprising a switch box (34L, 34R) located near the grip (30L, 30R),
wherein the operation unit (36A, 36B) is located on the switch box (34L, 34R).

4. The straddle type vehicle according to claim 2, wherein the grip (30L, 30R) includes:
a -rotatable grip (30R); and
a non-rotatable grip (30L),
wherein the operation unit (36A, 36B) is located near the non-rotatable grip (30L).

5. The straddle type vehicle according to claim 2, wherein the grip (30L, 30R) includes:
a throttle operating member (30R) usable to adjust a throttle opening; and
a grip member (30L) located opposite the throttle operating member (30R) such that both members are arranged in a vehicle width direction,
wherein the operation unit (36A, 36B) is located near the grip member (30L).

6. The straddle type vehicle according to claim 2, wherein the grip includes:
a right grip member (30R) located on a right end as measured in a vehicle width direction; and
a left grip member (30L) located on a left end as measured in a vehicle width direction,
wherein the operation unit (36A, 36B) is located near the left grip member (30L).

7. The straddle type vehicle according to any one of claims 1 to 6, wherein an operation on the select switch (36A) and an operation on the change switch (36B) are established by movements in different directions.

8. The straddle type vehicle according to claim 7, wherein the change switch (36B) is configured to allow for:
an operation for a first direction; and
an operation for a second direction that is opposite the first direction.

9. The straddle type vehicle according to any one of claims 1 to 8, wherein the display unit (22A) includes:
a first region configured to display information associated with the function selected by the select operation; and
a second region configured to display information associated with the setting of the function indicated by the information displayed in the first region.

10. The straddle type vehicle according to claim 1, wherein the select operation is performed by operating a single select switch (36A).

11. The straddle type vehicle according to claim 10, wherein the select operation is performed by operating the select switch (36A) in a movement in a single direction.

12. The straddle type vehicle according to claim 10 or 11, wherein a currently selected function switches each time the select switch (36A) is operated.

## Patentansprüche

1. Ein Grätsch-Typ-Fahrzeug, das folgende Merkmale aufweist:
eine Betriebseinheit (36A, 36B);
eine Anzeigeeinheit (22A), die ausgebildet ist, um Informationen anzuzeigen, die zumindest einer einer Mehrzahl von Funktionen zugeordnet sind, die jeweils eine veränderbare Einstellung aufweisen; und
eine Steuereinheit (50, 52, 54A, 56A, 58A), die ausgebildet ist, um die Einstellung der Funktion zu ändern, die durch die Informationen angegeben wird, die auf der Anzeigeeinheit (22A) angezeigt werden,
wobei
die Betriebseinheit (36A, 36B) einen Auswahlschalter (36A) aufweist, der ausgebildet ist, um einen Auswahlbetrieb zum Auswählen zumindest einer der Mehrzahl von Funktionen zu ermöglichen; und
die Betriebseinheit (36A, 36B) einen Änderungsschalter (36B) aufweist, der ausgebildet ist, um einen Änderungsbetrieb zum Ändern der Einstellungen der Mehrzahl von Funktionen zu ermöglichen,
die Anzeigeeinheit (22A) ausgebildet ist, um Informationen anzuzeigen, die der Funktion zugeordnet sind, die durch den Auswahlbetrieb ausgewählt wird,
die Steuereinheit (50, 52, 54A, 56A, 58A) ausgebildet ist, um gemäß dem Änderungsbetrieb die Einstellung der Funktion zu ändern, die durch die Informationen angegeben wird, die auf der Anzeigeeinheit (22A) angezeigt werden,
**dadurch gekennzeichnet, dass**
alle die Funktionen, deren Einstellungen geändert werden können, durch den Auswahlschalter (36A) ausgewählt werden.

2. Das Grätsch-Typ-Fahrzeug gemäß Anspruch 1, das ferner folgende Merkmale aufweist:
einen Lenker (18, 18L, 18R); und
einen Griff (30L, 30R), der auf dem Lenker (18, 18L, 18R) angeordnet ist,
wobei die Betriebseinheit (36A, 36B) in der Nähe des Griffs (30L, 30R) angeordnet ist.

3. Das Grätsch-Typ-Fahrzeug gemäß Anspruch 2, das ferner einen Schaltkasten (34L, 34R) aufweist, der in der Nähe des Griffs (30L, 30R) angeordnet ist,
wobei die Betriebseinheit (36A, 36B) auf dem Schaltkasten (34L, 34R) angeordnet ist.

4. Das Grätsch-Typ-Fahrzeug gemäß Anspruch 2, bei dem der Griff (30L, 30R) folgende Merkmale umfasst:
einen drehbaren Griff (30R); und
einen nicht drehbaren Griff (30L),
wobei die Betriebseinheit (36A, 36B) in der Nähe des nicht drehbaren Griffs (30L) angeordnet ist.

5. Das Grätsch-Typ-Fahrzeug gemäß Anspruch 2, bei dem der Griff (30L, 30R) folgende Merkmale umfasst:
ein Drosselbetriebsbauglied (30R), das verwendet werden kann, um eine Drosselöffnung einzustellen; und
ein Griffbauglied (30L), das gegenüber dem Drosselbetriebsbauglied (30R) angeordnet ist, so dass beide Bauglieder in einer Fahrzeugbreiterichtung angeordnet sind,
wobei die Betriebseinheit (36A, 36B) in der Nähe des Griffbauglieds (30L) angeordnet ist.

6. Das Grätsch-Typ-Fahrzeug gemäß Anspruch 2, bei dem der Griff folgende Merkmale umfasst:
ein rechtes Griffbauglied (30R), das in einer Fahrzeugbreiterichtung gemessen an einem rechten Ende angeordnet ist; und
ein linkes Griffbauglied (30L), das in einer Fahrzeugbreiterichtung gemessen an einem linken Ende angeordnet ist,
wobei die Betriebseinheit (36A, 36B) in der Nähe des linken Griffbauglieds (30L) angeordnet ist.

7. Das Grätsch-Typ-Fahrzeug gemäß einem der Ansprüche 1 bis 6, bei dem ein Betrieb an dem Auswahlschalter (36A) und ein Betrieb an dem Änderungsschalter (36B) durch Bewegungen in unterschiedlichen Richtungen eingerichtet werden.

8. Das Grätsch-Typ-Fahrzeug gemäß Anspruch 7, bei dem der Änderungsschalter (36B) ausgebildet ist, um Folgendes zu ermöglichen:
einen Betrieb für eine erste Richtung; und
einen Betrieb für eine zweite Richtung, die der ersten Richtung entgegengesetzt ist.

9. Das Grätsch-Typ-Fahrzeug gemäß einem der Ansprüche 1 bis 8, bei dem die Anzeigeeinheit (22A) folgende Merkmale umfasst:
eine erste Region, die ausgebildet ist, um Informationen anzuzeigen, die der Funktion zugeordnet sind, die durch den Auswahlbetrieb ausgewählt wird; und
eine zweite Region, die ausgebildet ist, um Informationen anzuzeigen, die der Einstellung der Funktion zugeordnet sind, die durch die Informationen angegeben wird, die in der ersten Region angezeigt werden.

10. Das Grätsch-Typ-Fahrzeug gemäß Anspruch 1, bei dem der Auswahlbetrieb durch Betreiben eines einzelnen Auswahlschalters (36A) durchgeführt wird.

11. Das Grätsch-Typ-Fahrzeug gemäß Anspruch 10, bei dem der Auswahlbetrieb durch Betreiben des Auswahlschalters (36A) in einer Bewegung in einer einzigen Richtung durchgeführt wird.

12. Das Grätsch-Typ-Fahrzeug gemäß Anspruch 10 oder 11, bei dem eine aktuell ausgewählte Funktion jedes Mal schaltet, wenn der Auswahlschalter (36A) betrieben wird.

## Revendications

1. Véhicule de type à selle, comprenant:
une unité d'actionnement (36A, 36B);
une unité d'affichage (22A) configurée pour afficher les informations associées à au moins l'une parmi une pluralité de fonctions présentant, chacune, un paramètre changeable; et
une unité de commande (50, 52, 54A, 56A, 58A) configurée pour changer le réglage de la fonction indiquée par les informations affichées à l'unité d'affichage (22A),
dans lequel
l'unité d'actionnement (36A, 36B) comprend un commutateur de sélection (36A) configuré pour permettre une opération de sélection pour sélectionner au moins l'une parmi la pluralité de fonctions; et
l'unité d'actionnement (36A, 36B) comprend un commutateur de (36b) configuré pour permettre une opération de changement pour changer les réglages de la pluralité de fonctions,
l'unité d'affichage (22A) est configurée pour afficher les informations associées à la fonction sélectionnée par l'opération de sélection,
l'unité de commande (50, 52, 54A, 56A, 58A) est configurée pour changer, selon l'opération de changement, le réglage de la fonction indiquée par les informations affichées à l'unité d'affichage (22A),
**caractérisé par le fait que**
toutes les fonctions dont les réglages peuvent être changés sont sélectionnées par le commutateur de sélection (36A).

2. Véhicule de type à selle selon la revendication 1, comprenant par ailleurs:
un guidon (18, 18L, 18R); et
une poignée (30L, 30R) située sur le guidon (18, 18L, 18R),
dans lequel l'unité d'actionnement (36A, 36B) est située à proximité de la poignée (30L, 30R).

3. Véhicule de type à selle selon la revendication 2, comprenant par ailleurs un boîtier de commutation (34L, 34R) situé près de la poignée (30L, 30R),
dans lequel l'unité d'actionnement (36A, 36B) est située sur le boîtier de commutation (34L, 34R).

4. Véhicule de type à selle selon la revendication 2, dans lequel la poignée (30L, 30R) comporte:
une poignée rotative (30R); et
une poignée non rotative (30L),
dans lequel l'unité d'actionnement (36A, 36B) est située à proximité de la poignée non rotative (30L).

5. Véhicule de type à selle selon la revendication 2, dans lequel la poignée (30L, 30R) comporte:
un élément d'actionnement d'accélérateur (30R) pouvant être utilisé pour régler une ouverture d'accélérateur; et
un élément de poignée (30L) situé opposé à l'élément d'actionnement d'accélérateur (30R) de sorte que les deux éléments soient disposés dans une direction de la largeur du véhicule,
dans lequel l'unité d'actionnement (36A, 36B) est située à proximité de l'élément de poignée (30L).

6. Véhicule de type à selle selon la revendication 2, dans lequel la poignée comporte:
un élément de poignée droit (30R) situé à une extrémité droite, tel que mesuré dans une direction de la largeur du véhicule; et
un élément de poignée gauche (30L) situé à une extrémité gauche, tel que mesuré dans une direction de la largeur du véhicule,
dans lequel l'unité d'actionnement (36A, 36B) est située près de l'élément de poignée gauche (30L).

7. Véhicule de type à selle selon l'une quelconque des revendications 1 à 6, dans lequel un actionnement sur le commutateur de sélection (36A) et un actionnement sur le commutateur de changement (36B) sont établis par des mouvements dans des directions différentes.

8. Véhicule de type à selle selon la revendication 7, dans lequel le commutateur de changement (36B) est configuré pour permettre:
un actionnement pour une première direction; et
un actionnement pour une deuxième direction qui est opposée à la première direction.

9. Véhicule de type à selle selon l'une quelconque des revendications 1 à 8, dans lequel l'unité d'affichage (22A) comporte:
une première région configurée pour afficher les informations associées à la fonction sélectionnée par l'opération de sélection; et
une deuxième région configurée pour afficher les informations associées au réglage de la fonction indiquée par les informations affichées dans la première région.

10. Véhicule de type à selle selon la revendication 1, dans lequel l'opération de sélection est effectuée en actionnant un seul commutateur de sélection (36A).

11. Véhicule de type à selle selon la revendication 10, dans lequel l'opération de sélection est effectuée en actionnant le commutateur de sélection (36A) pour un mouvement dans une seule direction.

12. Véhicule de type à selle selon la revendication 10 ou 11, dans lequel une fonction sélectionnée actuellement commute chaque fois que le commutateur de sélection (36A) est actionné.
